# EUROPÄISCHE PATENTSCHRIFT

(11) **EP 4 637 398 B1**
(45) Veröffentlichungstag und Bekanntmachung des Hinweises auf die Patenterteilung: **08.07.2026**
(21) Anmeldenummer: 23832985.8
(22) Anmeldetag: 12.12.2023
(51) Int. Cl.: A24C 5/60, B23K 26/08

(54) **LASERROLLTROMMEL UND MASCHINE DER TABAK VERARBEITENDEN INDUSTRIE**
LASER ROLLING DRUM AND MACHINE FOR THE TOBACCO-PROCESSING INDUSTRY
TAMBOUR DE ROULAGE À LASER ET MACHINE DE L'INDUSTRIE DE TRANSFORMATION DU TABAC

(30) Priorität: 23.12.2022 DE 102022134674
(43) Veröffentlichungstag der Anmeldung: 29.10.2025
(73) Patentinhaber: Körber Technologies GmbH, 21033 Hamburg (DE)
(72) Erfinder: JENDRIAN, Torsten, 21357 Bardowick (DE); STAMER, Martina, 22927 Großhansdorf (DE); WEIMANN, Frank, 23564 Lübeck (DE); VARAVA, Waldemar, 21509 Glinde (DE); GRASSMEL, Ralf, 21635 Jork (DE)
(74) Vertreter: Seemann & Partner Patentanwälte mbB
(86) Internationale Anmeldenummer: PCT/EP2023/085389
(87) Internationale Veröffentlichungsnummer: WO 2024/132712

(56) Entgegenhaltungen:
- DE-A1- 102019 124 541
- US-A- 5 598 855
- US-A- 6 070 592

## Beschreibung

Laserrolltrommel der Tabak verarbeitenden Industrie mit einer äußeren Muldentrommel mit verbreiterten Mulden, die im Betrieb der Laserrolltrommel auf einem stationären zentralen Teil angetrieben drehend angeordnet ist, der einen Steuerflansch umfasst, wobei die Laserrolltrommel ausgebildet ist, in den Mulden ihrer äußeren Muldentrommel mit einem Umhüllungspapier umhüllte stabförmige Artikel der Tabak verarbeitenden Industrie queraxial in den Bereich einer Laserperforationsvorrichtung der Laserrolltrommel zu fördern, die eingerichtet ist, im Betrieb der Laserrolltrommel Umhüllungspapiere von stabförmigen Artikeln von innerhalb der Laserrolltrommel zu perforieren, sowie eine Absaugvorrichtung, die eingerichtet ist, mit Laserstaubpartikeln belastete Luft aus der Umgebung des Ortes abzusaugen, an dem die stabförmigen Artikel perforiert werden. Die Erfindung betrifft ferner eine Maschine der Tabak verarbeitenden Industrie mit einer erfindungsgemäßen Laserrolltrommel.

Bei der Herstellung von stabförmigen Artikeln der Tabak verarbeitenden Industrie, insbesondere von Zigaretten, wird an den einfach oder, häufiger, doppelt langen Zigaretten, deren Filterstäbe mit einem Umhüllungspapierstreifen umhüllt sind, per Laserperforation des Umhüllungspapierstreifens die Luftdurchlässigkeit eingestellt. Auch bei der Herstellung von Zigaretten oder Heat-not-Burn-Produkten (HNB) in der Tabak verarbeitenden Industrie wird die Belüftung der Artikel durch Laserperforation des jeweiligen Umhüllungspapiers eingestellt, die die Luftdurchlässigkeit des jeweiligen Umhüllungspapiers erhöht. Zum Zweck der Laserperforation werden die stabförmigen Artikel, beispielsweise Zigaretten oder HNB-Produkte, auf einer Laserrolltrommel gefördert und von einem Laser oder mehreren Lasern von außerhalb der Laserrolltrommel oder von innerhalb der Laserrolltrommel perforiert.

Die Laserrolltrommeln sind Teil eines Systems, das eine rotierende Muldentrommel mit verbreiterten Mulden und ein oder mehrere Rollelemente, beispielsweise sogenannte Rollnocken, umfasst. Die Grundfläche der verbreiterten Mulden ist als Abrollfläche ausgebildet, die typischerweise eine Querriffelung aufweist, die ein Durchrutschen der Artikel beim Abrollen verhindert. Die Breite der verbreiterten Mulden entspricht üblicherweise dem Umfang des jeweiligen Artikels oder ist etwas größer als dieser. Im Verlauf der Produktion werden die stabförmigen Artikel an einer Seite einer vorauslaufenden Wand einer verbreiterten Mulde per Saugluft gehalten und in den Bereich der rotierenden, aber ortsfesten, Rollnocken gefördert. Auch die Umfangsfläche der Rollnocken kann geriffelt sein, um ein Wegrutschen der Artikel zu unterbinden. Die rotierende Umfangsfläche der Rollnocken hat im Punkt der größten Annäherung an die Muldentrommel einen Abstand zur Abrollfläche der Mulden, der etwas kleiner ist als der Artikeldurchmesser. Damit wird der Artikel zwischen Rollnocken und Muldenabrollfläche leicht angedrückt. Gleichzeitig dreht sich der Rollnocken mit einer Umfangsgeschwindigkeit, die der Umfangsgeschwindigkeit der Rolltrommel im Bereich der Abrollflächen im Wesentlichen oder genau entspricht, achsparallel zur Muldentrommel in der gleichen Drehrichtung wie die Muldentrommel. Dadurch wird der stabförmige Artikel in die entgegengesetzte Drehrichtung gedreht und bleibt dabei im Wesentlichen oder genau ortsfest, bis der stabförmige Artikel nach etwa einer vollständigen Drehung um 360° oder etwas mehr als 360° an die nachlaufende Wand der Mulde stößt und von dieser mitgenommen und im weiteren Verlauf per Saugluft gehalten wird. Während des Rollens verbleibt der stabförmige Artikel im Fokus der Laserperforationsvorrichtung.

Während der Laserperforation ist eine prozessbedingte Entstehung von Laserstaub nicht zu vermeiden. Dies gilt für HNB-Produkte noch mehr als für konventionelle Zigaretten, da Umhüllungspapiere bei HNB-Produkten mit Grammaturen um 80 bis 120 g/m² um ein Mehrfaches dicker sind als bei Zigaretten, deren Grammatur eher im Bereich zwischen 15 und 30 g/m² liegt. Die benötigte Strahlintensität bzw. Laserleistung ist bei HNB-Produkten dementsprechend auch größer als bei konventionellen Zigaretten.

Die Perforationslöcher in den Umhüllungspapieren haben typischerweise Abstände in der Größenordnung von 1 bis 2 mm voneinander. Gleichzeitig sind pro Minute mehrere tausend stabförmige Objekte zu perforieren, so dass eine entsprechend hohe Pulstaktung und Leistung bei der Perforation erforderlich ist.

Durch die extrem schnelle Erhitzung und den großen Massendurchsatz löst sich eine große Menge an Laserstaubpartikeln aus dem Papiermaterial, insbesondere bei den HNB-Produkten. Die Laserstaubpartikel sind zuckerhaltig, also wenigstens zu einem Teil organischer Natur, und daher stark anhaftend (klebrig). Aus diesem Grund sammelt sich der Laserstaub an den Maschinenbauteilen sehr schnell an. Um dies zu verhindern, wird der Laserstaub aus dem Prozessraum in einem Luftstrom kontinuierlich abgesaugt. Dabei ist es das Ziel, die Laseroptik, die Mulden der Laserrolltrommel und den Steuerflansch der Laserrolltrommel, der Saugluftsteuerkanäle zur Steuerung der Saugluft in den Mulden der Laserrolltrommel umfasst, in der unmittelbaren Nähe des Orts der Laserperforation möglichst staubfrei zu halten.

Wie die Laserperforation selbst, so kann auch die Absaugung der mit Laserstaubpartikeln belasteten Luft von außerhalb der Laserrolltrommel oder von innerhalb der Laserrolltrommel erfolgen. Bei einer Absaugung von außerhalb wird beispielsweise eine Absaughaube verwendet. Der aus dem Prozessraum abgesaugte Staub wird weiter durch anschließende Einbauten, wie Rohrleitungen oder ein Funkensieb sowie eventuell andere strömungstechnische Elemente und Gebläse bis zu einer zentralen Abluft transportiert. Auf diesem langen Weg kann sich der Laserstaub in jedem Totwassergebiet, d.h. Gebiet mit geringer Strömungsgeschwindigkeit, ablagern und lässt die Nutzquerschnitte der Rohrleitung zuwachsen. Je nach Ventilationsgrad des Produkts führen diese Verschmutzungen zu ungeplanten Maschinenstopps und verursachen einen sehr hohen Reinigungsaufwand.

Das Vorhandensein von Totwassergebieten lässt sich durch Optimierung der Rohrleitungen bis zu einem gewissen Grad minimieren, beispielsweise durch Vermeidung unnötiger Strömungsquerschnittsänderungen oder Biegungen mit engem Radius.

Aus US 6,070,592 A ist eine Filterherstellungsmaschine mit einer Lasertrommel und einer im Inneren der Trommel angeordneten Laserperforationsvorrichtung bekannt. Zu perforierende Artikel werden in Sitzen in einzelnen um ihre eigenen Achsen drehbaren Gondeln aufgenommen, die ihrerseits am Umfang der Trommel angeordnet sind. Bei der Perforation entstehende Dämpfe und Staub werden von außerhalb abgesaugt. Eine Laserlichtquelle befindet sich außerhalb der sich drehenden Laserrolltrommel. Dieses Dokument beschreibt eine Trommel mit den im Oberbegriff des vorliegenden Anspruchs 1 aufgeführten Merkmalen.

Eine weitere Laserperforationstrommel mit rotierenden Gondeln ist aus US 5,598,855 A bekannt.

DE 10 2019 124 541 A1 offenbart eine Vorrichtung und ein Verfahren zum Bearbeiten von Umhüllungsmaterial eines stabförmigen Artikels der Tabak verarbeiten Industrie zum unterbrechungsfreien und sicheren Perforieren des Umhüllungsmaterials. Die Vorrichtung umfasst ein Transportelement, eine Druckluftstation, eine Lasereinrichtung zum Perforieren des Umhüllungsmaterials der stabförmigen Artikel und eine Schutzgasstation zur Bereitstellung von sauerstoffarmem Schutzgas. Das Schutzgas wird durch Aufbereiten der Druckluft erzeugt und in den Wirkbereich des Laserstrahls weitergeleitet.

Der vorliegenden Erfindung liegt die Aufgabe zugrunde, die Staubproblematik bei der Laserperforation von stabförmigen Artikeln der Tabak verarbeitenden Industrie weiter zu vermindern.

Diese Aufgabe wird gelöst durch eine Laserrolltrommel der Tabak verarbeitenden Industrie, so wie im Anspruch 1 definiert, mit einer Laserperforationseinrichtung, einer Absaugvorrichtung, sowie mit einer äußeren Muldentrommel mit Mulden, die insbesondere eine vorauseilende und eine nacheilende Flanke aufweisen, deren Abstand zwischen 15 und 50 mm beträgt, die im Betrieb der Laserrolltrommel auf einem stationären zentralen Teil angetrieben drehend angeordnet ist, der einen Steuerflansch umfasst, wobei die Laserrolltrommel ausgebildet ist, in den Mulden ihrer äußeren Muldentrommel mit einem Umhüllungspapier umhüllte stabförmige Artikel der Tabak verarbeitenden Industrie, insbesondere Zigaretten oder Heat-not-Burn-Produkte, queraxial in den Bereich der Laserperforationsvorrichtung zu fördern, die eingerichtet ist, im Betrieb der Laserrolltrommel Umhüllungspapiere von stabförmigen Artikeln von innerhalb der Laserrolltrommel mit wenigstens einem Laserstrahl zu perforieren, wobei die Absaugvorrichtung eingerichtet ist, mit Laserstaubpartikeln belastete Luft oder Schutzgas von innerhalb der Laserrolltrommel aus der Umgebung des Ortes abzusaugen, an dem die stabförmigen Artikel perforiert werden, die dadurch weitergebildet ist, dass die Laserperforationsvorrichtung wenigstens einen optischen Pfad für wenigstens einen Laserstrahl über eine Mehrzahl von stationären Umlenkelementen und Fokussierungselementen definiert, wobei ein Teil des wenigstens einen optischen Pfades durch den stationären zentralen Teil der Laserrolltrommel verläuft.

Die Erfindung beruht auf der Grundidee, das staubbelastete Volumen in der Maschine möglichst klein zu halten. Ein kleines Volumen lässt sich effektiver absaugen als ein größeres Volumen, so dass weniger Laserstaub verbleibt, der sich im Innenraum und auf optischen und mechanischen Elementen und Strukturen absetzen kann. Hierfür erfolgt zunächst die Laserperforation von innerhalb der Laserrolltrommel. Entsprechende rotierende Muldentrommel, die entlang ihres Umfangs Öffnungen für die Laserperforation von innerhalb der Laserrolltrommel aufweisen, sind bekannt. Laserstaub entsteht durch die Laserperforation von innen an der zur Laserrolltrommel weisenden Unterseite der stabförmigen Artikel und gelangt daher fast ausschließlich durch die schlitzförmigen Öffnungen in der Muldentrommel in den Innenraum der Laserrolltrommel, nicht aber in den Bereich außerhalb. Dies wird durch eine Absaugung von innerhalb der Laserrolltrommel unterstützt, welche verhindert, dass Laserstaubpartikel nach außen auftreten können.

Dies wird dadurch unterstützt, dass der optische Pfad bzw. Strahlengang, der gegen den Eintritt von Laserstaub besonders empfindlich ist, im Inneren der Laserrolltrommel angeordnet ist und über eine Mehrzahl von ausschließlich stationären Umlenkelementen und Fokussierungselementen definiert ist, also keine bewegten, insbesondere rotierenden, Umlenkelemente umfasst. Eine solche ausschließlich stationäre Ausführung des optischen Pfads kann im Vergleich zu optischen Strahlengängen mit rotierenden oder bewegten optischen Elementen, die beispielsweise die Rotation der Muldentrommel streckenweise nachvollziehen, wesentlich kleiner bauend ausgeführt werden und hat damit ein wesentlich kleineres von Laserstaub freizuhaltendes Volumen. Auf diese Weise kann der optische Strahlengang effektiver von Laserstaub freigehalten werden als bislang.

Vorteilhafterweise verläuft ein Teil des optischen Pfades durch den Steuerflansch. Dieser bildet den peripheren Teil des stationären zentralen Teils der Laserrolltrommel, auf dem die Muldentrommel rotiert. Der stationäre zentrale Teil der Laserrolltrommel ist konzentrisch mit der Muldentrommel und umfasst üblicherweise auch Mittel zum Antrieb der Drehbewegung der Muldentrommel. Der Steuerflansch umfasst Saugluftkanäle, die an den Teilen des Umfangs des Steuerflansches offen sind, an denen die stabförmigen Artikel mittels Saugluft am Muldengrund und/oder an einer Muldenwand gehalten werden sollen. Bei der hier beschriebenen Laserrolltrommel weist der Steuerflansch an der Position der Laserperforation auch Durchgangsöffnungen für den Laserstrahl bzw. die Laserstrahlen auf.

Der Steuerflansch kann den stationären zentralen Teil der Laserrolltrommel bilden, jedoch kann der stationäre zentrale Teil auch aus mehreren Teilen zusammengesetzt sein, deren äußerster Teil der Steuerflansch ist. Dies hat den Vorteil, dass bei einem Formatwechsel oder einer Wartung zunächst die Muldentrommel und dann der Steuerflansch vom stationären zentralen Teil abgenommen werden kann, sodass der zentrale Teil für eine Reinigung und gegebenenfalls Neueinstellung der optischen Elemente zugänglich wird.

In Ausführungsformen ist wenigstens ein Teil des wenigstens einen optischen Pfads, der sich innerhalb des stationären zentralen Teils der Laserrolltrommel befindet, zur Beaufschlagung mit einem Überdruck mit einer Druckluftquelle oder Quelle für unter Druck stehendem Schutzgas, insbesondere N₂, verbindbar oder verbunden. Dies verhindert wirksam, dass Laserstaub in den optischen Strahlengang eintritt. Hierfür ist ein relativ geringer Überdruck ausreichend, beispielsweise 0,1 bar bis 0,3 bar. Die Verwendung von Schutzgas verhindert, dass dennoch in den optischen Pfad eindringender Laserstaub vom Laserstrahl entzündet wird.

In weiteren Ausführungsformen ist wenigstens ein Teil des wenigstens einen optischen Pfads, der ein letztes Fokussierungselement oder Umlenkelement vor Austritt in einen Absaugraum in der Laserrolltrommel umfasst, mit einem in den Absaugraum hinein gerichteten Luftstrom von Druckluft oder unter Druck stehendem Schutzgas, insbesondere N₂, beaufschlagbar oder beaufschlagt. Hierdurch wird ein doppelter Effekt erzielt. So ist das letzte Fokussierungselement oder Umlenkelement besonders vom Eindringen und Sich-Absetzen von Laserstaub betroffen und wird durch die lokalisierte Beaufschlagung mit einem Luft- oder Schutzgasstrom unter Überdruck effektiv von Laserstaub befreit, der sich gegebenenfalls bereits abgesetzt hat. Ein solcher Überdruck kann beispielsweise auch zwischen 0,2 bar und 1,0 bar oder mehr betragen. Der aus der Laseroptik in den Absaugraum gerichtete Luftstrom bzw. Schutzgasstrom erzeugt außerdem eine effektive Barriere, die ein Eindringen von Laserstaub in den optischen Strahlengang wirksam unterdrückt.

In Ausführungsformen umfasst die Absaugvorrichtung einen Absaugkanal, dessen Mitte gegenüber einem Ort der Laserperforation der stabförmigen Artikel innerhalb der Laserrolltrommel in Richtung der Drehbewegung der Muldentrommel versetzt angeordnet ist. Die Richtung dieser Versetzung unterstützt die effiziente Absaugung von Laserstaubpartikeln, da sie einer vorherrschenden Bewegungskomponente der Laserstaubpartikel entspricht. Diese werden zum einen in Richtung des in die Perforationsstelle hereinkommenden Laserstrahl zurück ausgeworfen, zum anderen erhalten sie eine Bewegungskomponente in Umfangsdrehrichtung der Drehbewegung des bei der Laserperforation gerollten stabförmigen Artikels. Diese Drehrichtung entspricht auch der umfänglichen Bewegungsrichtung der Oberfläche der Muldentrommel. Auf diese Weise ist die Bewegung der Laserstaubpartikel bereits in Richtung auf den Absaugkanal hin ausgerichtet.

Vorzugsweise sind einzelne oder alle Umlenkelemente und/oder Fokussierungselemente für Formatwechsel in ihrer Positionierung und/oder Ausrichtung einstellbar, insbesondere von Hand oder per Aktuator. Damit können Formatwechsel unterstützt werden, bei denen nach einer Fertigung von Artikeln eines bestimmten Durchmessers andere Artikel mit einem kleineren oder größeren Durchmesser für andere Marken gefertigt werden. Auch der Perforationsabstand oder das Perforationsmuster können geändert werden.

Bei Laserrolltrommelsystemen sind sowohl die Muldentrommel als auch die gegenüberliegenden Rollnocken formatspezifisch angepasst, und beide werden bei einem Formatwechsel gegen jeweils andere, passende Muldentrommel und Rollnocken ausgetauscht.

Hierzu ist die Muldentrommel gegen eine passende Muldentrommel auszutauschen, deren Radius in Bezug auf die jeweilige Abrollfläche in den verbreiterten Mulden sowie deren Muldenbreite an den veränderten Durchmesser der stabförmigen Artikel angepasst sind. Ebenso wird typischerweise ein anderer Rollnocken mit angepasstem Durchmesser verwendet, damit die Förderebene des Zentrums der stabförmigen Artikel trotz des Formatwechsels gleich bleibt. Hierdurch entfernt sich bei einer Verringerung des Durchmessers der zu perforierenden stabförmigen Artikel bei einem Formatwechsel die zu perforierende Oberfläche des Umhüllungspapiers von der letzten Linse des optischen Pfades der Laserperforationsvorrichtung, und damit aus dem Fokus der Laserperformationsvorrichtung heraus. Um diese Veränderung auszugleichen, wird typischerweise die letzte fokussierende Linse verschoben, so dass der Fokus des Laserstrahls wiederum auf bzw. im Umhüllungspapier des stabförmigen Artikels liegt.

Vorteilhafterweise ist der optische Pfad im stationären zentralen Teil der Laserrolltrommel wenigstens abschnittsweise und/oder ist der stationäre zentrale Teil der Laserrolltrommel wenigstens teilweise gekapselt. Damit wird verhindert, dass Laserstaub in andere Teile des stationären zentralen Teils der Laserrolltrommel, insbesondere in den optischen Pfad, eindringen kann. Somit bietet sich für den Laserstaub im Inneren der Laserrolltrommel im Wesentlichen nur der Absaugkanal sowie die Öffnung oder Öffnungen der Laseroptik, die durch den Absaugkanal hindurch strahlt und in Ausführungsformen mittels Überdruck und/oder einem in den Absaugkanal hinein gerichteten Luftstrom vor dem Eindringen von Laserstaub geschützt ist oder sind. Die Kapselung dient auch der Verkleinerung des vom Laserstaub zu befreienden Volumens, die auf diese Weise effektiv erfolgen kann.

Die der Erfindung zugrunde liegende Aufgabe wird auch durch eine Maschine der Tabak verarbeitenden Industrie zur Herstellung von stabförmigen Artikeln der Tabak verarbeitenden Industrie gelöst, die eine zuvor beschriebene erfindungsgemäße Laserrolltrommel mit einer Laserperforationsvorrichtung und einer Absaugeinrichtung für Laserstaub umfasst, sowie eine Abrolleinrichtung mit wenigstens einem Abrollelement, insbesondere wenigstens einem um seine Längsachse rotierend angetriebenen Rollnocken, das entlang eines Förderwegs der stabförmigen Artikel auf der Laserrolltrommel so angeordnet ist, dass im Betrieb der Maschine die stabförmigen Artikel jeweils in ihren Mulden auf der Muldentrommel in einer Zusammenwirkung des wenigstens einen Abrollelements mit einer Oberfläche der Muldentrommel für wenigstens eine vollständige Umdrehung um ihre Achse gerollt werden, wobei sie entlang des Förderwegs ortsfest gehalten werden.

Die Maschine verwirklicht die gleichen Merkmale und Vorteile wie die erfindungsgemäße Laserrolltrommel.

In Ausführungsformen ist eine Strahlzuführung zum stationären zentralen Teil der Laserrolltrommel von einer Maschinenseite ausgebildet, die durch einen Zwischenraum zwischen einem die Laserrolltrommel haltenden Maschinenteil und der rotierenden Muldentrommel geführt ist.

Wenn die Laserlichtquelle außerhalb der Laserrolltrommel angeordnet ist, lässt sich die Laserlichtquelle im Falle eines Problems ohne Auseinanderbauen der Laserrolltrommel untersuchen.

Weitere Merkmale der Erfindung werden aus der Beschreibung erfindungsgemäßer Ausführungsformen zusammen mit den Ansprüchen und den beigefügten Zeichnungen ersichtlich.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine Laserrolltrommel mit Rollnocken und außenliegender Laserperforationsvorrichtung nach dem Stand der Technik,
- Fig. 2: eine Prinzipdarstellung des Laser- und Absaugvorgangs in einer Laserrolltrommel mit Laserbeaufschlagung und Absaugung von innen,
- Fig. 3A, 3B: schematische perspektive Darstellungen von Teilen eines ersten Ausführungsbeispiels einer erfindungsgemäßen Laserrolltrommel,
- Fig. 4A, 4B: schematische perspektivische Darstellungen des Strahlengangs der Ausführungsform der Fig. 3A, 3B,
- Fig. 5: eine schematische perspektivische Darstellung von Teilen eines zweiten Ausführungsbeispiels einer erfindungsgemäßen Laserrolltrommel,
- Fig. 6: eine schematische Querschnittsdarstellung durch das zweite Ausführungsbeispiel,
- Fig. 7: eine schematische perspektivische Schnittdarstellung durch einen zentralen Teil des zweiten Ausführungsbeispiels,
- Fig. 8: eine schematische Schnittdarstellung durch die Laserrolltrommel des zweiten Ausführungsbeispiels und
- Fig. 9A, 9B, 9C: schematische perspektivische Darstellungen der Laserrolltrommel des zweiten Ausführungsbeispiels in verschiedenen Stadien des Zusammenbaus.

Im Rahmen der Erfindung sind Merkmale, die mit "insbesondere" oder "vorzugsweise" gekennzeichnet sind, als fakultative Merkmale zu verstehen.

In den Zeichnungen sind jeweils gleiche oder gleichartige Elemente und/oder Teile mit denselben Bezugsziffern versehen, so dass von einer erneuten Vorstellung jeweils abgesehen wird.

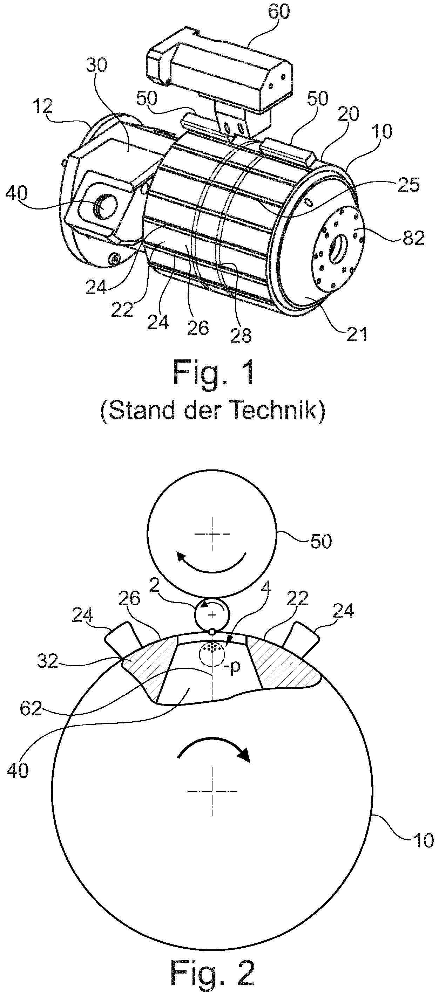

Fig. 1 zeigt eine schematische perspektivische Darstellung einer Laserrolltrommel 10 mit zwei Rollnocken 50 und außenliegender Laserperforationsvorrichtung 60 nach dem Stand der Technik. Diese Laserrolltrommel ist für die Perforierung doppelt langer stabförmiger Artikel ausgebildet, die im weiteren Verlauf der Verarbeitung noch in einfach lange stabförmige Artikel geschnitten werden.

Auf der Seite der Maschine (ohne Darstellung) befindet sich ein Anschlussstutzen 12 oder Anschlussflansch, mit dem die Laserrolltrommel 10 an einer Wand einer Maschine der Tabak verarbeitenden Industrie angeschlossen wird. Von der Laserrolltrommel 10 ist in der in Fig. 1 gezeigten Darstellung die rotierende äußere Muldentrommel 20 dargestellt. Axial ist die Muldentrommel 20 durch eine Endkappe 21 abgeschlossen, die die Muldentrommel 20 analog einer Radfelge mit einer zentralen Antriebsachse 82 verbindet. Axial zur Maschinenseite hin erstreckt sich ein zentraler stationärer Teil 30 der Laserrolltrommel 10, auf dem die Muldentrommel 20 koaxial aufsitzt und rotiert. Dieser weist ein Ende eines Absaugkanals 40 auf, der in den folgenden Figuren noch näher beschrieben wird.

Die äußere Umfangsfläche der Muldentrommel 20 ist durch regelmäßig beabstandete Muldenwände 24 in verbreiterte Mulden 22 aufgeteilt, die im Betrieb jeweils einen doppelt langen stabförmigen Artikel (ohne Darstellung in Fig. 1) aufnehmen. Diese werden mittels Saugluft, die in Saugluftöffnungen 25 beidseitig der Muldenwände 24 eingezogen wird, an einer der beiden Seiten der Muldenwände 24 gehalten und dabei mittels der Rotation der Muldentrommel 20 queraxial gefördert. Im Verlauf der queraxialen Förderung werden die stabförmigen Artikel zunächst an der in Muldendrehrichtung rückwärtigen Seite der vorauslaufenden Muldenwand 24 einer Mulde 22 gehalten. Sie werden auf diese Weise in den Bereich von Rollnocken 50 gefördert. Die Rollnocken sind angetriebene rotierende Walzen, die einen Durchgang für die in den Mulden 22 geförderten doppelt langen stabförmigen Artikel definieren, der etwas schmaler ist als der Durchmesser der Artikel. Damit werden die Artikel von zwei Seiten kontaktiert. Dabei ist die Rotation der Rollnocken 50 gleichsinnig zur Rotation der Muldentrommel 20, so dass die dazwischen eingefassten Artikel im Gegensinn zu den Rotationsrichtungen der Rollnocken 50 und Muldentrommel 20 gerollt werden. Hierzu sind typischerweise die Umfangsflächen der Rollnocken 50 und der Boden der jeweiligen Mulde 22 als Abrollfläche 26 mit einer Riffelung 26 versehen, die ein Durchrutschen des Artikels während des Rollens verhindert. Vorzugsweise ist die Umfangsgeschwindigkeit von Rollnocken 50 und Muldentrommel 20 gleich groß, so dass die stabförmigen Artikel während des Rollens ortsfest verbleiben. Das Rollen der stabförmigen Artikel ist beendet, sobald die nachlaufende Muldenwand 24 den Artikel erreicht und mit sich nimmt.

Weiter ist eine Laserperforationsvorrichtung 60 außerhalb der Muldentrommel 20 im Bereich der Rollnocken 50 angeordnet, die ausgebildet ist, jeden der Teilartikel der doppelt langen Artikel mit einem Laserstrahl in einer Reihe oder mit zwei oder mehr Laserstrahlen in mehreren dicht beieinander liegenden Reihen von Perforationslöchern oder -schlitzen zu perforieren. Hierzu kann ein Laser verwendet werden, dessen Laserstrahl mittels Strahlteilern aufgeteilt wird, oder es werden mehrere Laser verwendet, insbesondere, wenn jede der späteren einfach langen Artikel mehrere Reihen von Perforationslöchern aufweisen soll. Die Länge und Frequenz der Laserpulse bestimmt dabei den Grad der Ventilation. Zwischen zwei aufeinanderfolgenden Artikeln wird der Laser nicht betrieben.

Die Laserperforationsvorrichtung 60 beaufschlagt die Artikel von außerhalb der Laserrolltrommel 10 mit dem Laserstrahl. Deshalb geht der beim Laserperforieren entstehende Laserstaub zunächst in die Umgebung. Die mit Laserstaub belastete Luft wird durch schlitzförmige Öffnungen 28 in der Umfangsfläche der Muldentrommel 20 in unmittelbarer Nähe zu dem axialen Ort der Laserperforation der stabförmigen Artikel nach innerhalb der Laserperforationstrommel 10 abgesaugt.

Fig. 2 zeigt eine Prinzipdarstellung des Laser- und Absaugvorgangs in einer Laserrolltrommel 10 mit Laserbeaufschlagung und Absaugung von innen im Querschnitt. Im oberen Bildteil ist das Prinzip des Rollens des einen stabförmigen Artikels 2 zwischen einem Rollnocken 50 und der Abrollfläche 26 dargestellt. Pfeile im Rollnocken 50 und in der Laserrolltrommel 10 zeigen die jeweilige Rotationsrichtung an, die in beiden Fällen im Uhrzeigersinn ist. Zwischen beiden ist ein stabförmiger Artikel 2 eingefasst, der entsprechend im Gegenuhrzeigersinn gerollt wird (kleiner Pfeil).

Von innerhalb der Laserrolltrommel 10 wird der zentrale unterste Punkt des Artikels 2 mit einem fokussierten Laserstrahl 62 beaufschlagt und perforiert. Dabei entsteht Laserstaub, der nach unten und aufgrund der Drehung des Artikels in der Darstellung der Fig. 2 zum Teil nach rechts (in Drehrichtung) gerichtet abgestoßen wird. Der Steuerflansch 32 bzw. der zentrale stationäre Teil 30 der Laserrolltrommel 10 weist einen Absaugkanal 40 auf, der mit einem Unterdruck ("-p") beaufschlagt ist und Laserstaub somit abführt.

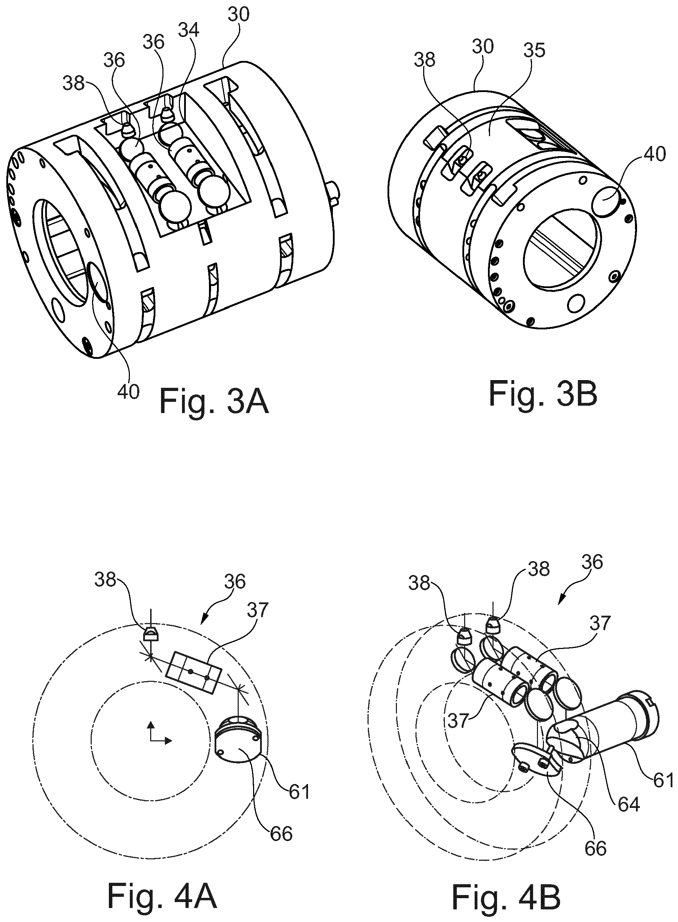

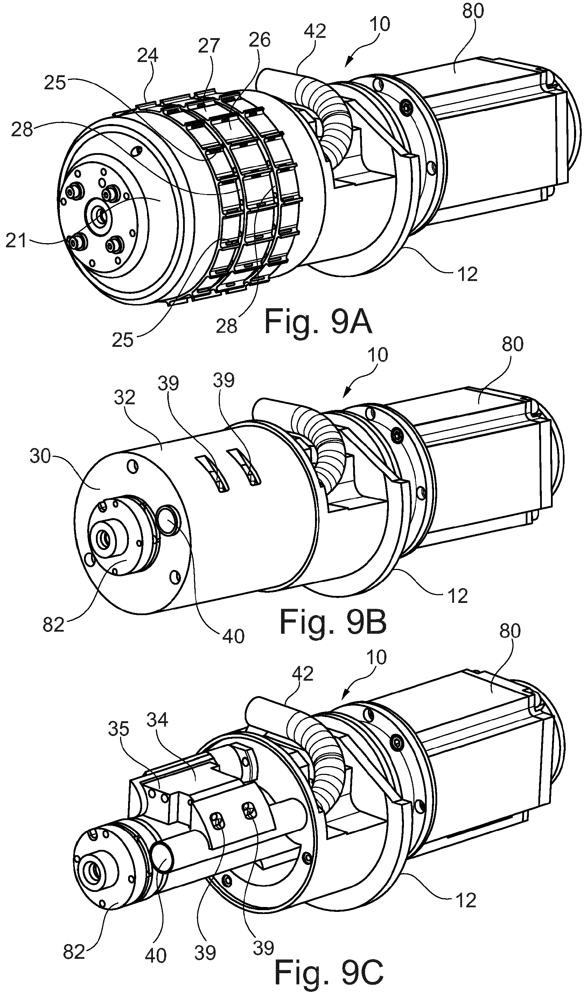

Die Figuren 3A, 3B zeigen schematische perspektive Darstellungen von Teilen eines ersten Ausführungsbeispiels einer erfindungsgemäßen Laserrolltrommel 10 bzw. deren zentralen stationären Teils 30. Die zentrale durchgehende Öffnung des Teils 30 nimmt eine Antriebsachse eines Antriebsmotors für die rotierende Muldentrommel 20 auf. Dies ist beispielsweise mit Bezug zu einem zweiten Ausführungsbeispiel in den Figuren 9B und 9C gezeigt, die sich in diesem Punkt nicht vom ersten Ausführungsbeispiel unterscheiden.

Wie in Fig. 3A zu sehen ist, weist der zentrale stationäre Teil 30 an seiner Peripherie einen Hohlraum auf, der als Raum 34 für eine bzw. zwei optische Pfade dient. Dazu sind in dem Raum 34 zwei parallele Sets von optischen Umlenk- und Fokussierungselementen 36 angeordnet, die Laserstrahlen von einer oder mehreren nicht dargestellten Laserlichtquellen zum Ort der Laserperforation leiten. Dieser Hohlraum ist in Fig. 3B mit einer als Kapselung 35 wirkenden Abdeckung abgedeckt, die ein Eindringen von Staub in den Raum 34 verhindert. Während des Betriebs sind alle optischen Umlenk- und Fokussierungselemente 36 stationär angeordnet. Für Formatwechsel kann die Kapselung 35 bzw. Abdeckung abgenommen werden, um beispielsweise eine letztes Fokussierelement 38 zu verschieben und so auf ein verändertes Format anzupassen.

Die Figuren 4A und 4B zeigen schematische Darstellungen des Strahlengangs der Ausführungsform der Figuren 3A und 3B aus zwei verschiedenen Perspektiven. Alle Strukturen, die nicht optische Elemente sind, wurden weggelassen. Es ist jeweils eine Laserlichtquelle 61 dargestellt, die einen gepulsten Laserstrahl 62 für die Laserperforation erzeugt. Dieser wird in dem gezeigten Ausführungsbeispiel mittels eines Strahlteilers 64 in zwei Strahlen aufgeteilt, von denen einer direkt unter 90° zur Achse des ursprünglich erzeugten Laserstrahls 62 austritt und der zweite durch einen weiteren Spiegel 66 in die gleiche Richtung parallel dazu umgelenkt wird. Die beiden parallelen Sets von optischen Umlenkelementen weisen jeweils einen ersten Spiegel, ein Linsensystem 37, einen zweiten Spiegel und ein Fokussierelement 38, beispielsweise eine weitere Linse, auf, die den Laserstrahl 62 leiten und formen. Das Fokussierelement ist gegebenenfalls zu verschieben, um den Fokus an sich ändernde Formate der zu perforierenden stabförmigen Artikel anzupassen. Auch die übrigen Elemente können gegebenenfalls in ihrer Position und Ausrichtung geändert werden, falls die Laserperforation nicht mehr spezifikationsgemäß ist und sich beispielsweise defokussiert hat oder nicht mehr an der richtigen Position ist.

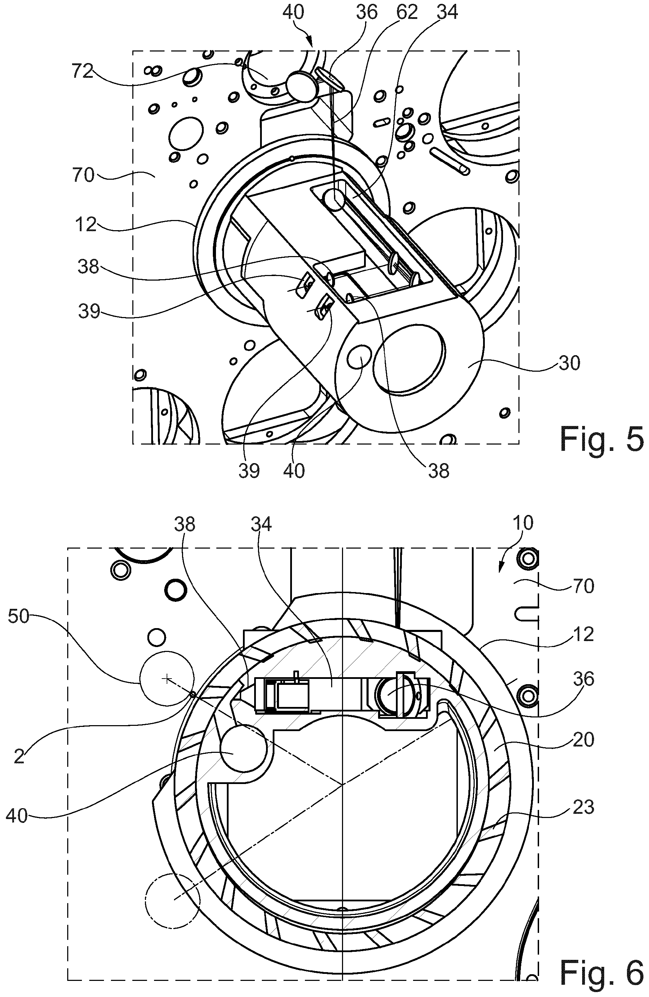

In Fig. 5 ist eine perspektivisch schematische Darstellung eines zentralen Teils 30 eines zweiten Ausführungsbeispiels einer erfindungsgemäßen Laserrolltrommel 10 gezeigt. Dieser ist über einen Anschlussstutzen 12 an einer Maschinenwand 70 mit einer (perspektivisch verdeckten) Aufnahme für den Anschlussstutzen 12 befestigt. Eine Laserlichtquelle (perspektivisch verdeckt) ist in der Maschine hinter einer Öffnung 72 für Laserstrahlen angeordnet. Vor der Maschinenwand im Prozessraum und vor der Öffnung 72 befindet sich ein Paar von Umlenkspiegeln, die dem Laserstrahl 62 oder einem Bündel von zwei oder in diesem Fall drei Laserstrahlen 62 zunächst einen seitlichen Versatz und dann eine vertikale Richtung nach unten geben. In einem maschinennahen Teil des zentralen stationären Teils 30 gelangt das Bündel von Laserstrahlen 62 auf einen Umlenkspiegel in einem Raum 34 für den optischen Pfad, der die Laserstrahlen 62 parallel zur Längsachse der Laserrolltrommel 10 umlenkt. Im weiteren Verlauf treffen die Laserstrahlen 62 auf einen Strahlteiler und einen Umlenkspiegel, die aus den drei Laserstrahlen 62 zwei Bündel von je drei Laserstrahlen 62 für die Laserperforation in jeweils drei parallelen Reihen pro einfach langem Artikel der doppelt langen Artikel macht. Die Laserstrahlen 62 werden jeweils durch ein letztes Fokussierelement 38 fokussiert und treten durch eine Austrittsöffnung 39 aus dem zentralen stationären Teil 30 aus. Im Gegensatz zum ersten Ausführungsbeispiel treten die Laserstrahlen in dem in Fig. 5 gezeigten zweiten Ausführungsbeispiel nicht radial, sondern unter einem Winkel zur lokalen Normalen aus. Dadurch trifft der Laserstrahl 62 etwas seitlich versetzt zum Berührungspunkt zwischen Artikel und Abrollfläche auf der Artikeloberfläche auf.

Der Raum 34 kann über einen Druckluftanschluss mit Luft oder einem Schutzgas unter Überdruck beaufschlagt werden, um ihn frei von Laserstaub zu halten. Ferner kann der Teil des Raums 34 um die Fokussierelemente 38 herum mit einem nach außen gerichteten Luft- oder Schutzgasstrom beaufschlagt werden, um die Fokussierelemente 38 von Laserstaub zu befreien und einen Luftvorhang zum Schutz vor dem Eindringen von Laserstaub zu generieren.

Weitere Elemente, die in Fig. 5 zu erkennen sind, sind ein Absaugkanal 40 sowie die zentrale Durchtrittsöffnung für eine Antriebsachse für die äußere rotierende Muldentrommel.

Fig. 6 zeigt eine schematische Querschnittsdarstellung durch das zweite Ausführungsbeispiel der Fig. 5. Zusätzlich zu den in Fig. 5 gezeigten Elementen sind außerdem auch eine Muldentrommel 20, ein Artikel 2 und ein Rollnocken 50 im Querschnitt gezeigt. Die Muldentrommel 20 weist an den Orten der (hier aus Gründen der Übersichtlichkeit weggelassenen) Muldenwänden 24 innere Saugluftkanäle 23 auf, die der Versorgung der Saugluftöffnungen 25 der Muldenwände 24 dient, wie sie u.a. in Fig. 1 dargestellt sind.

Im Querschnitt ist auch der Absaugkanal 40 dargestellt, der in der Nähe des Punktes verläuft, an dem die Laserperforation der stabförmigen Artikel 2 stattfindet. Dieser ist an dieser Stelle über die u.a. in Fig. 1 dargestellten schlitzförmigen Öffnungen mit der Außenseite der Mulden 22 der Muldentrommel 20 verbunden, die im Gegensatz zu dem bekannten Beispiel der Fig. 1 im Falle der Fig. 6 allerdings außerdem den Durchtritt der Laserstrahlen 62 zum Zwecke der Laserperforation erlauben.

Ferner ist in Fig. 6 zu erkennen, dass der optische Pfad des Laserlichts im Raum 34 im Inneren der Laserrolltrommel 10 abschnittsweise eingekapselt ist. Dieser kann mit einer Druckluft- oder Schutzgasquelle verbunden sein, die durch einen Überdruck, der nur in den Absaugkanal 40 entweichen kann, das Eindringen von Laserstaub unterbindet.

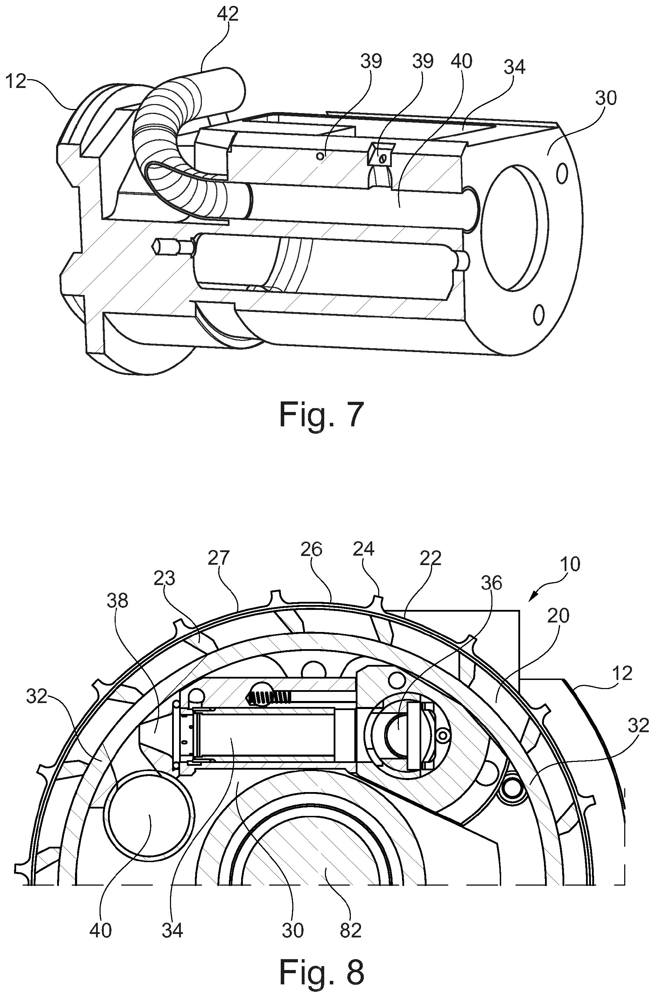

Fig. 7 zeigt eine schematische perspektivische Schnittdarstellung durch einen zentralen Teil des zweiten Ausführungsbeispiels. Der Schnitt verläuft seitlich durch den zentralen stationären Teil 30 und durch den Absaugkanal 40. Dieser mündet auf der Maschinenseite in einem gebogenen Absaugrohr 42, welches zu einer zentralen Absaugung führt, gegebenenfalls über eine katalytische Nachverbrennung.

Fig. 8 zeigt eine detailliertere schematische Schnittdarstellung durch die Laserrolltrommel 10 des zweiten Ausführungsbeispiels. In dieser Darstellung ist auch die rotierende Muldentrommel 20 mit den Mulden 22 gezeigt, deren Muldenwände 24 über Saugluftkanäle 23 mit Saugluft versorgt werden, und deren Abrollflächen 26 mit einer Riffelung 27 versehen sind.

Innerhalb der Muldentrommel 20 ist der Steuerflansch 32 dargestellt, der um den innersten Teil des zentralen stationären Teils 30 herum angeordnet ist. In diesem ist unter anderem der Absaugkanal 40 und der Raum 34 für den optischen Pfad der Laserstrahlen 62 mit den optischen Umlenk- und Fokussierungselementen 36 angeordnet. Diese treffen sich nur ausgangs des letzten Fokussierelements 38, welches von innerhalb des Raums 36 mit einem Überdruck vor dem Eindringen und Absetzen von Laserstaub geschützt wird. Eine Zuleitung für Druckluft oder Schutzgas ist räumlich gegenüber der hier gezeigten Schnittebene versetzt angeordnet und in Fig. 8 nicht dargestellt.

Im Zentrum ist außerdem die Antriebsachse 82 für die Muldentrommel 20 dargestellt.

Die Figuren 9A, 9B und 9C zeigen schematische perspektivische Darstellungen der Laserrolltrommel 10 des zweiten Ausführungsbeispiels in verschiedenen Stadien des Zusammenbaus. Jeweils rechts im Bild ist ein Antriebsmotor 80 gezeigt, der über eine Antriebsachse 82 und eine Endkappe 21 die in Fig. 9A gezeigte Muldentrommel antreibt, welche an ihrer Umfangsfläche Mulden 22 für doppelt lange stabförmige Artikel aufweist, die durch Muldenwände 24 mit beidseitigen Saugluftöffnungen 25 voneinander abgegrenzt sind. In Umfangsrichtung finden sich zwei Reihen von schlitzförmigen Öffnungen 28, die zum Einsaugen von Absaugluft sowie zum Durchtritt von Laserstrahlen 62 dienen.

Die Laserrolltrommel 10 verfügt über einen Anschlussstutzen 12 zur Befestigung an einer Haltewand einer Herstellungsmaschine für stabförmige Artikel der Tabak verarbeitenden Industrie. Zwischen dem Anschlussstutzen 12 und der Muldentrommel 20 befindet sich ein Teil des zentralen stationären Teils 30 der Laserrolltrommel 10, der nicht von der Muldentrommel 20 verdeckt wird. In diesem Bereich tritt einerseits das Absaugrohr 42 heraus, das den Absaugkanal 40 verlängert, und, perspektivisch verdeckt, befindet sich in diesem Bereich ein Teil des optischen Pfades der Laserstrahlen, in dem der Laserstrahl 62 in den Raum 34 für den optischen Pfad eingeleitet wird (vgl. Fig. 5).

In Fig. 9B und Fig. 9B ist dargestellt, dass zum Zwecke der Wartung und des Formatwechsels der zentrale stationäre Teil 30 aus mehreren Teilen zusammengesetzt wird, wobei die zentralen Teile, die in Fig. 9C dargestellt sind und den optischen Pfad enthalten, durch den an seiner Außenseite zylindrischen Steuerflansch 32 abgedeckt und eingehüllt werden.

Aus Gründen der Übersichtlichkeit wurden die üblicherweise vorhandenen Saugluftsteuerkanäle an der Außenseite des Steuerflansches 32 weggelassen. Der Steuerflansch enthält zwei Öffnungen, die mit den Austrittsöffnungen 39 im innersten zentralen Teil fluchten. Die Kapselung 35 bzw. Abdeckung des Raums 34 lässt sich im Falle eines Umbaus öffnen, um die strahlenführenden Elemente beispielsweise neu zu justieren oder für einen Formatwechsel anzupassen. Gleichzeitig bietet die Konstruktion eine hohe Staubfestigkeit und daher lange Laufzeiten ohne Produktionsunterbrechung.

### Bezugszeichenliste

- 2: stabförmiger Artikel
- 4: Laserstaub
- 10: Laserrolltrommel
- 12: Anschlussstutzen
- 20: Muldentrommel
- 21: Endkappe
- 22: Mulden
- 23: Saugluftkanal
- 24: Muldenwand
- 25: Saugluftöffnung
- 26: Abrollfläche
- 27: Riffelung
- 28: schlitzförmige Öffnung
- 30: zentraler stationärer Teil
- 32: Steuerflansch
- 34: Raum für optischen Pfad
- 35: Kapselung
- 36: optische Umlenk- und Fokussierungselemente
- 37: Linsensystem
- 38: Fokussierelement
- 39: Austrittsöffnung
- 40: Absaugkanal
- 42: Absaugrohr
- 50: Rollnocken
- 60: Laserperforationsvorrichtung
- 61: Laserlichtquelle
- 62: Laserstrahl
- 64: Strahlteiler
- 66: Spiegel
- 70: Maschinenwand
- 72: Öffnung für Laserstrahlen
- 80: Antriebsmotor
- 82: Antriebsachse

## Patentansprüche

1. Laserrolltrommel (10) der Tabak verarbeitenden Industrie mit einer Laserperforationseinrichtung (60), einer Absaugvorrichtung (40, 42), sowie mit einer äußeren Muldentrommel (20) mit Mulden (22), wobei die Laserrolltrommel (10) ausgebildet ist, in den Mulden (22) ihrer äußeren Muldentrommel (20) mit einem Umhüllungspapier umhüllte stabförmige Artikel (2) der Tabak verarbeitenden Industrie, insbesondere Zigaretten (5) oder Heat-not-Burn-Produkte, queraxial in den Bereich der Laserperforationsvorrichtung (60) zu fördern, die eingerichtet ist, im Betrieb der Laserrolltrommel (10) Umhüllungspapiere von stabförmigen Artikeln (2) von innerhalb der Laserrolltrommel (10) mit wenigstens einem Laserstrahl (62) zu perforieren, wobei die Laserperforationsvorrichtung (60) wenigstens einen optischen Pfad für wenigstens einen Laserstrahl (62) über eine Mehrzahl von stationären Umlenkelementen und Fokussierungselementen (36, 37, 38) definiert, **dadurch gekennzeichnet, dass**
die Muldentrommel (20) im Betrieb der Laserrolltrommel (10) auf einem stationären zentralen Teil (30) angetrieben drehend angeordnet ist, der einen Steuerflansch (32) umfasst;
wobei weiterhin die Absaugvorrichtung (40, 42) eingerichtet ist, mit Laserstaubpartikeln belastete Luft oder Schutzgas von innerhalb der Laserrolltrommel (10) aus der Umgebung des Ortes abzusaugen, an dem die stabförmigen Artikel (2) perforiert werden;
wobei weiterhin ein Teil des wenigstens einen optischen Pfades durch den stationären zentralen Teil (30) der Laserrolltrommel (10) verläuft.

2. Laserrolltrommel (10) nach Anspruch 1, **dadurch gekennzeichnet, dass** ein Teil des optischen Pfades durch den Steuerflansch (32) verläuft.

3. Laserrolltrommel (10) nach Anspruch 1 oder 2, **dadurch gekennzeichnet, dass** der stationäre zentrale Teil (30) aus mehreren Teilen zusammengesetzt ist, deren äußerster Teil der Steuerflansch (32) ist.

4. Laserrolltrommel (10) nach einem der Ansprüche 1 bis 3, **dadurch gekennzeichnet, dass** wenigstens ein Teil des wenigstens einen optischen Pfades, der sich innerhalb des stationären zentralen Teils (30) der Laserrolltrommel (10) befindet, zur Beaufschlagung mit einem Überdruck mit einer Druckluftquelle oder Quelle für unter Druck stehendem Schutzgas, insbesondere N₂, verbindbar oder verbunden ist.

5. Laserrolltrommel (10) nach einem der Ansprüche 1 bis 4, **dadurch gekennzeichnet, dass** wenigstens ein Teil des wenigstens einen optischen Pfades, der ein letztes Fokussierungselement (38) oder Umlenkelement vor Austritt in einen Absaugraum in der Laserrolltrommel umfasst, mit einem in den Absaugraum hinein gerichteten Luftstrom von Druckluft oder unter Druck stehendem Schutzgas, insbesondere N₂, beaufschlagbar oder beaufschlagt ist.

6. Laserrolltrommel (10) nach einem der Ansprüche 1 bis 5, **dadurch gekennzeichnet, dass** die Absaugvorrichtung einen Absaugkanal (40) umfasst, dessen Mitte gegenüber einem Ort der Laserperforation der stabförmigen Artikel innerhalb der Laserrolltrommel (10) in Richtung der Drehbewegung der Muldentrommel (20) versetzt angeordnet ist.

7. Laserrolltrommel (10) nach einem der Ansprüche 1 bis 6, **dadurch gekennzeichnet, dass** einzelne oder alle Umlenkelemente und/oder Fokussierungselemente (36, 37, 38) für Formatwechsel in ihrer Positionierung und/oder Ausrichtung einstellbar sind, insbesondere von Hand oder per Aktuator.

8. Laserrolltrommel (10) nach einem der Ansprüche 1 bis 7, **dadurch gekennzeichnet, dass** der optische Pfad im stationären zentralen Teil (30) der Laserrolltrommel (10) wenigstens abschnittsweise gekapselt ist und/oder der stationäre zentrale Teil (30) der Laserrolltrommel (10) wenigstens teilweise gekapselt ist.

9. Maschine der Tabak verarbeitenden Industrie zur Herstellung von stabförmigen Artikeln (2) der Tabak verarbeitenden Industrie, umfassend eine Laserrolltrommel (10) mit einer Laserperforationsvorrichtung (60) und einer Absaugeinrichtung (40, 42) für Laserstaub nach einem der Ansprüche 1 bis 8, sowie eine Abrolleinrichtung mit wenigstens einem Abrollelement, insbesondere wenigstens einem um seine Längsachse rotierend angetriebenen Rollnocken (50), das entlang eines Förderwegs der stabförmigen Artikel (2) auf der Laserrolltrommel (10) so angeordnet ist, dass im Betrieb der Maschine die stabförmigen Artikel (2) jeweils in ihren Mulden auf der Muldentrommel in einer Zusammenwirkung des wenigstens einen Abrollelements mit einer Oberfläche der Muldentrommel (20) für wenigstens eine vollständige Umdrehung um ihre Achse gerollt werden, wobei sie entlang des Förderwegs ortsfest gehalten werden.

10. Maschine nach Anspruch 9, **dadurch gekennzeichnet, dass** eine Strahlzuführung zum stationären zentralen Teil (30) der Laserrolltrommel (10) von einer Maschinenseite ausgebildet ist, die durch einen Zwischenraum zwischen einem die Laserrolltrommel (10) haltenden Maschinenteil (70) und der rotierenden Muldentrommel (20) geführt ist.

11. Maschine nach Anspruch 9 oder 10, **dadurch gekennzeichnet, dass** die Laserlichtquelle (61) außerhalb der Laserrolltrommel (10) angeordnet ist.

## Claims

1. A laser rolling drum (10) for the tobacco-processing industry, having a laser perforation device (60), an extraction device (40, 42), as well as having an outer trough drum (20) with troughs (22), wherein the laser rolling drum (10) is configured to convey rod-shaped articles (2) for the tobacco-processing industry, in particular cigarettes (5) or heat-not-burn products, wrapped with a wrapping paper in the troughs (22) of its outer trough drum (20), transversely axially into the region of the laser perforation device (60) which is designed to perforate wrapping papers of rod-shaped articles (2) from inside the laser rolling drum (10) with at least one laser beam (62), during operation of the laser rolling drum (10), wherein the laser perforation device (60) defines at least one optical path for at least one laser beam (62) via a plurality of stationary deflection elements and focusing elements (36, 37, 38), **characterized in that** the trough drum (20) is arranged to be rotationally driven on a stationary central part (30) which comprises a control flange (32), during operation of the laser rolling drum (10); wherein the extraction device (40, 42) is furthermore designed to extract air or shielding gas contaminated with laser dust particles from inside the laser rolling drum (10), from the area surrounding the location at which the rod-shaped articles (2) are perforated;
wherein a part of the at least one optical path furthermore runs through the stationary central part (30) of the laser rolling drum (10).

2. The laser rolling drum (10) according to Claim 1, **characterized in that** a part of the optical path runs through the control flange (32).

3. The laser rolling drum (10) according to Claim 1 or 2, **characterized in that** the stationary central part (30) is composed of multiple parts, the outermost part of which is the control flange (32).

4. The laser rolling drum (10) according to any one of Claims 1 to 3, **characterized in that** at least a part of the at least one optical path which is located inside the stationary central part (30) of the laser rolling drum (10) can be or is connected to a source of compressed air or source of pressurized shielding gas, in particular N₂, for the application of an overpressure.

5. The laser rolling drum (10) according to any one of Claims 1 to 4, **characterized in that** at least a part of the at least one optical path which comprises a last focusing element (38) or deflection element before exiting into an extraction chamber in the laser rolling drum can be or is subjected to an air flow of compressed air or pressurized shielding gas, in particular N₂, directed into the extraction chamber.

6. The laser rolling drum (10) according to any one of Claims 1 to 5, **characterized in that** the extraction device comprises an extraction channel (40), the center of which is arranged offset with respect to a location of the laser perforation of the rod-shaped articles inside the laser rolling drum (10) in the direction of the rotational movement of the trough drum (20).

7. The laser rolling drum (10) according to any one of Claims 1 to 6, **characterized in that** individual or all deflection elements and/or focusing elements (36, 37, 38) can be adjusted in their positioning and/or alignment for format changes, in particular by hand or by actuator.

8. The laser rolling drum (10) according to any one of Claims 1 to 7, **characterized in that** the optical path in the stationary central part (30) of the laser rolling drum (10) is encapsulated at least in sections and/or the stationary central part (30) of the laser roller drum (10) is at least partially encapsulated.

9. A machine for the tobacco-processing industry for producing rod-shaped articles (2) for the tobacco-processing industry, comprising a laser rolling drum (10) having a laser perforation device (60) and an extraction device (40, 42) for laser dust according to any one of Claims 1 to 8, as well as a rolling device having at least one rolling element, in particular at least one rolling cam (50) driven in a rotating manner about its longitudinal axis, which is arranged along a conveying path of the rod-shaped articles (2) on the laser rolling drum (10) such that, during operation of the machine, the rod-shaped articles (2) are each rolled in their troughs on the trough drum in an interaction of the at least one rolling element with a surface of the trough drum (20) for at least one complete revolution about their axis, wherein they are held in a stationary manner along the conveying path.

10. The machine according to Claim 9, **characterized in that** a beam feed to the stationary central part (30) of the laser rolling drum (10) is configured from a machine side which is guided through an intermediate space between a machine part (70) which holds the laser rolling drum (10) and the rotating trough drum (20).

11. The machine according to Claim 9 or 10, **characterized in that** the laser light source (61) is arranged outside the laser rolling drum (10).

## Revendications

1. Tambour de roulage (10) à laser destiné à l'industrie de transformation du tabac, comprenant un dispositif (60) de perforation par laser, un dispositif d'aspiration (40, 42), ainsi qu'un tambour extérieur (20) à augets présentant des augets (22),
le tambour de roulage (10) à laser étant conçu pour acheminer de manière transversale et axiale, dans les augets (22) de son tambour extérieur (20) à augets, des articles (2) en forme de bâtonnets de l'industrie de transformation du tabac, en particulier des cigarettes (5) ou des produits « Heat-not-Burn » (à tabac chauffé) enveloppés de papier d'enveloppement, vers la zone du dispositif (60) de perforation par laser, lequel est agencé de manière à, lors du fonctionnement du tambour de roulage (10) à laser, perforer les papiers d'enveloppement des articles (2) en forme de bâtonnets depuis l'intérieur du tambour de roulage (10) à laser au moyen d'au moins un faisceau laser (62), le dispositif (60) de perforation par laser définissant au moins un trajet optique pour au moins un faisceau laser (62) via une pluralité d'éléments de déviation et d'éléments de focalisation fixes (36, 37, 38),
**caractérisé en ce que**
le tambour à augets (20) est agencé de manière à, lors du fonctionnement du tambour de roulage (10) à laser, tourner sous l'action d'un système d'entraînement sur une partie centrale fixe (30) qui comprend une bride de guidage (32) ;
le dispositif d'aspiration (40, 42) étant en outre agencé de manière à aspirer l'air chargé de particules de poussière laser ou le gaz protecteur depuis l'intérieur du tambour de roulage (10) à laser, hors de la zone environnant l'endroit où les articles (2) en forme de bâtonnets sont perforés ;
une partie dudit au moins un trajet optique s'étendant en outre à travers la partie centrale fixe (30) du tambour de roulage (10) à laser.

2. Tambour de roulage (10) à laser selon la revendication 1, **caractérisé en ce qu'**une partie du trajet optique s'étend à travers la bride de guidage (32).

3. Tambour de roulage (10) à laser selon la revendication 1 ou la revendication 2, **caractérisé en ce que** la partie centrale fixe (30) est composée de plusieurs parties, dont la partie la plus extérieure est la bride de guidage (32).

4. Tambour de roulage (10) à laser selon l'une des revendications 1 à 3, **caractérisé en ce qu'**au moins une partie desdits un ou plusieurs chemins optiques situés à l'intérieur de la partie centrale fixe (30) du tambour de roulage (10) à laser est apte à être reliée ou est reliée à une source d'air comprimé ou à une source de gaz inerte sous pression, en particulier du N₂, afin d'être soumise à une surpression.

5. Tambour de roulage (10) à laser selon l'une des revendications 1 à 4, **caractérisé en ce qu'**au moins une partie dudit au moins un trajet optique, qui comprend un dernier élément de focalisation (38) ou un élément de déviation avant la sortie vers une chambre d'aspiration dans le tambour de roulage à laser, est apte à être alimentée, ou est alimentée, par un flux d'air comprimé ou de gaz protecteur sous pression, en particulier du N₂, dirigé vers la chambre d'aspiration.

6. Tambour de roulage (10) à laser selon l'une des revendications 1 à 5, **caractérisé en ce que** le dispositif d'aspiration comprend un canal d'aspiration (40) dont le centre est décalé par rapport à un emplacement de l'article en forme de bâtonnet perforé au laser à l'intérieur du tambour de roulage (10) à laser, dans le sens du mouvement de rotation du tambour (20) à augets.

7. Tambour de roulage (10) à laser selon l'une des revendications 1 à 6, **caractérisé en ce que** les éléments de déviation et/ou de focalisation (36, 37, 38) sont, individuellement ou en totalité, réglables en position et/ou en orientation pour un changement de format, notamment manuellement ou par un actionneur.

8. Tambour de roulage (10) à laser selon l'une des revendications 1 à 7, **caractérisé en ce que** le trajet optique dans la partie centrale fixe (30) du tambour de roulage (10) à laser est au moins partiellement encapsulé et/ou **en ce que** la partie centrale fixe (30) du tambour de roulage (10) à laser est encapsulée au moins partiellement.

9. Machine pour l'industrie de transformation du tabac destinée à la fabrication d'articles (2) en forme de bâtonnets de l'industrie de transformation du tabac, comprenant un tambour de roulage (10) à laser muni d'un dispositif (60) de perforation par laser et d'un dispositif d'aspiration (40, 42) pour la poussière laser, selon l'une des revendications 1 à 8, ainsi qu'un dispositif de roulement présentant au moins un élément de roulement, en particulier au moins une came de roulement (50) entraînée en rotation autour de son axe longitudinal, qui est agencé le long d'un trajet de transport des articles (2) en forme de bâtonnets sur le tambour de roulage (10) à laser de telle sorte que, pendant le fonctionnement de la machine, les articles (2) en forme de bâtonnets soient roulés, chacun dans son auget sur le tambour à augets, par interaction dudit au moins un élément de roulement avec une surface du tambour à augets (20), pour au moins un tour complet autour de son axe, tout en étant maintenus fixes le long du trajet de transport.

10. Machine selon la revendication 9, **caractérisée en ce qu'**une alimentation en faisceau vers la partie centrale fixe (30) du tambour de roulage (10) à laser est formée à partir d'un côté de la machine, laquelle alimentation est guidée à travers un espace entre une partie de machine (70) supportant le tambour de roulage (10) à laser et le tambour rotatif (20) à augets.

11. Machine selon la revendication 9 ou la revendication 10, **caractérisée en ce que** la source (61) de lumière laser est agencée à l'extérieur du tambour de roulage (10) à laser.
